Europäisches Patentamt

European Patent Office

Office européen des brevets

(19)

(11) Veröffentlichungsnummer: **0 344 524**
**A1**

## (12) EUROPÄISCHE PATENTANMELDUNG

(21) Anmeldenummer: **89108918.7**

(22) Anmeldetag: **18.05.89**

(51) Int. Cl.⁴: **B60R 11/02**

(30) Priorität: **28.06.88 DE 3821713**
**01.06.88 DE 8807153 U**

(43) Veröffentlichungstag der Anmeldung:
**06.12.89 Patentblatt 89/49**

(84) Benannte Vertragsstaaten:
**AT BE CH DE ES FR GB GR IT LI LU NL SE**

(71) Anmelder: **Cohausz, Helge B.**
**Schumannstrasse 97**
**D-4000 Düsseldorf(DE)**

(72) Erfinder: **Cohausz, Helge B.**
**Schumannstrasse 97**
**D-4000 Düsseldorf(DE)**

(74) Vertreter: **Patentanwaltsbüro Cohausz &**
**Florack**
**Schumannstrasse.97**
**D-4000 Düsseldorf 1(DE)**

(54) **In einem Kraftfahrzeug eingebautes Radio.**

(57) Die Erfindung betrifft ein Radio im Kraftfahrzeugarmaturenbrett mit einem Bauteil (4), das im oder
am Radio lösbar befestigt und im an- oder eingesetzten Zustand durch Kontakte angeschlossen ist,
in dem zumindest die wesentlichen elektronischen
Bauteile des Empfängers und/oder des Verstärkers
sind und dessen Außenabmessungen kleiner sind als
die des Radiogehäuses (2), wobei das Bauteil plattenförmig ist und insbesondere die Größe und/oder
Form einer Plastik-Kreditkarte (bzw. Identitätskarte)
besitzt.

Fig.2

EP 0 344 524 A1

## In einem Kraftfahrzeug eingebautes Radio

Die Erfindung betrifft ein Radio, das insbesondere in einem Kraftfahrzeug einbaubar ist.

Um zu verhindern, daß ein in einem Kraftfahrzeugarmaturenbrett befestigtes Radio gestohlen wird, sind die verschiedensten Lösungen bekannt. Codierte Radios sind aufwendig in der Bedienung und herausnehmbare Radios sind für den Kraftfahrzeuginhaber wegen ihrer Größe und ihres Gewichts unbequem in der Handhabung.

Es ist bekannt, einen Teil des Autoradios abnehmbar zu gestalten. So wird in der DE-OS 36 24 716 vorgeschlagen, die Front des Radios mit den Bedienungselementen abzunehmen, so daß der Autobesitzer dieses Teil aus dem Auto mitnehmen kann. Hierbei bleiben aber wertvolle elektronische Teile in dem Teil des Radios, das im Auto festsitzt. Aus der GB-A 20 52 197 (DE-A 30 21 087) ist es bekannt, ein kastenförmiges Modul im Radiogehäuse zu lagern, das nach vorne herausziehbar ist und wesentliche Bauteile des Autoradios enthält. Ein solches kastenförmiges Modul ist verhältnismäßig groß und schwer, so daß es unbequem ist, das Modul mit herumzutragen.

Aufgabe der Erfindung ist es, ein Kraftfahrzeugradio zu schaffen, das einen Diebstahl mit hoher Sicherheit verhindert und leicht und bequem zu handhaben ist.

Diese Aufgabe wird erfindungsgemäß durch eine der Lehren in den Ansprüchen 1 bis 5 gelöst.

Das wesentliche elektronische Elemente enthaltende Bauteil kann beim Verlassen des Autos mitgenommen werden und ist aufgrund der kleinen Außenabmessungen in eine Tasche steckbar. Die im Auto verbleibenden Radioteile sind für einen Dieb wertlos. Ein Dieb hat damit nicht die Möglichkeit, wesentliche Teile des Radios zu erreichen, so daß es für ihn nicht mehr lohnenswert ist, ein Kraftfahrzeug aufzubrechen. Es kann von ihm zwar das Restradio entnommen werden, aber dieses ist von geringem Wert und nicht funktionstüchtig. Da wertvolle elektronische Teile und Elemente im Bauteil enthalten sind, ist eine Ersatzbeschaffung des Bauteils für den Dieb zu kostenaufwendig.

Unter diesem Bauteil wird auch eine Befestigung einer Anzahl von wesentlichen, insbesondere elektronischen Bauteilen durch Eingießen in einen Kunststoff und oder in Schichtbauweise verstanden. Im Gegensatz zu den bekannten getrennten und elektrisch insbesondere durch Kabel abgeschlossenen Radiobauteilen oder Radiobaugruppen ist das erfindungsgemäße Bauteil wie ein Schlüssel leicht entnehmbar und bei Abwesenheit des Benutzers in der Regel nicht mehr im oder am Radio. Darüber hinaus hat das Bauteil den Vorteil, daß Bauteile mit unterschiedlichem Inhalt angeboten werden können, um hierdurch unterschiedliche Radiotypen anzubieten. Auch kann durch Kauf eines neuen Bauteils das Radio verbessert oder auf den neuesten technischen Stand gebracht werden. Das entnehmbare Bauteil ist damit vom Fahrer leicht lösbar. Besonders groß sind obengenannten Vorteile, wenn das Bauteil die Form einer Kredit- oder Identitäskarte hat.

Es ist an sich bekannt ein komplettes tragbares Radio in Form und Größe einer Kreditkarte bzw. Indentitäskarte herzustellen. Diese Radios sind aber schon allein wegen ihres sehr kleinen Lautsprechers in der Klangqualität schlecht und als Autoradio ungeeignet.

Drei Ausführungsbeispiele der Erfindung sind in der Zeichnung perspektivisch dargestellt und werden im folgenden näher beschrieben. Es zeigen:

Figur 1 ein Ausführungsbeispiel mit zylindrischem Bauteil bzw. Einsetzteil,

Figur 2 ein Ausführungsbeispiel mit plattenförmigen Bauteil bzw. Einsetzteil im halb eingeschobenen Zustand,

Figur 3 ein Ausführungsbeispiel mit schlüsselförmigem Bauteil bzw. Einsetzteil.

Das Kraftfahrzeugradio weist eine Frontplatte 1 auf, an deren Rückseite ein Gehäuse 2 befestigt ist, in dem die Empfänger- und Verstärkerteile enthalten sind. In der Frontplatte 1 mündet ein das Innere des Gehäuses 2 durchdringender zylindrischer, quaderförmiger oder schlitzförmiger Hohlraum, dessen Achse senkrecht zur Ebene der Frontplatte 1 in der Öffnung 3. In diese Öffnung 3 und in den Hohlraum ist ein Bauteil 4 steckbar, dessen Außenabmessungen zumindest im einsteckbaren Bereich etwa den Innenabmessungen des Hohlraumes entsprechen. Das vordere Ende des Bauteils 4 ragt einige Millimeter aus der Frontplatte nach vorne raus, um von Hand leicht ergriffen werden zu können. Das Bauteil 4, insbesondere in Form einer Patrone kann damit aus der Platte 1 und dem Gehäuse 2 von Hand leicht herausgezogen werden.

Die Abmessungen des Bauteils 4 sind wesentlich kleiner als die des Gehäuses 2, so daß es nach der Herausnahme vom Fahrer leicht mitgenommen, insbesondere in die Tasche gesteckt werden kann. In der Zeichnung ist das Bauteil 4 im eingesteckten Zustand dargestellt und ferner in gestrichelter Form 4a in teilweise herausgezogenem Zustand.

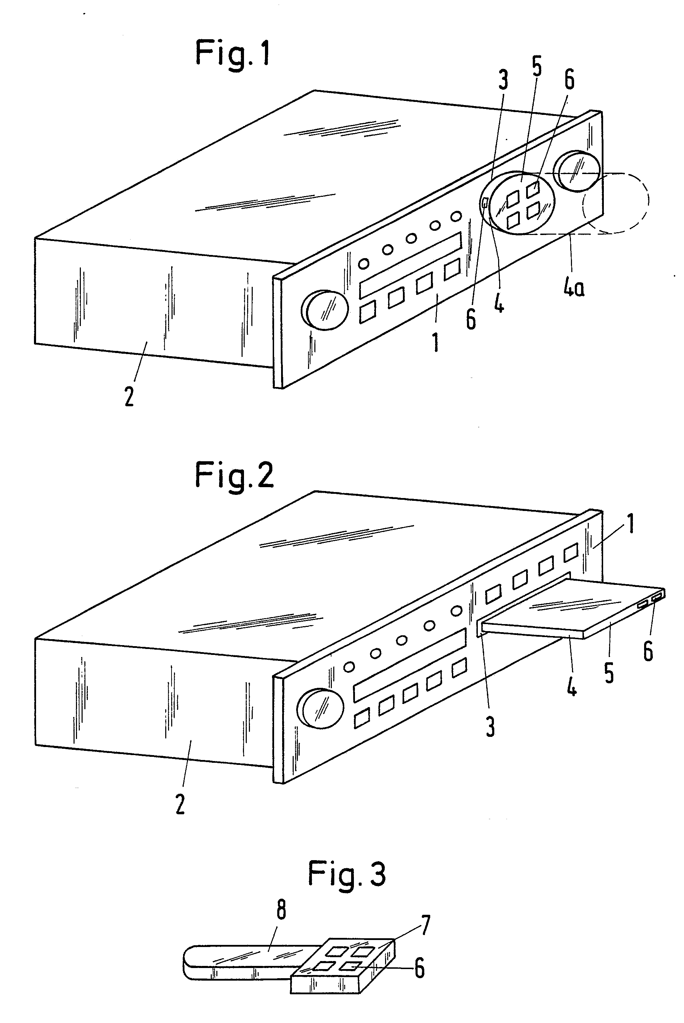

Das Gehäuse 2 enthält alle mechanischen Teile des Radios und keine oder einige elektronische Teile, so daß das Bauteil das elektronische "Herz" bzw. den elektronischen Kern des Radios enthält. An der Außenseite des Bauteils 4 sind Kontakte angeordnet, die nach vollständigem Einstecken des Bauteils 4 in das Gehäuse 2 mit innerhalb des Gehäuses 2 befindlichen Kontakten in Berührung kommen. Das Bauteil 4 enthält alle oder einen Teil der wesentlichen elektronischen Bestandteile des Radios und, wenn vorhanden, die des Tonbands- oder Plattengerätes, insbesondere integrierte elektronische Bausteine, ohne die das Radio und/oder die anderen Geräte nicht funktionieren und die verhältnismäßig teuer in der Anschaffung sind. Das Bauteil 4 kann durch einen Schnellverschluß am Radio befestigt sein, insbesondere kann ein steiles Gewinde oder ein Bajonettverschluß eingearbeitet sein, so daß nach einer Drehung um weniger als 360 Grad das Bauteil 4 entnehmbar ist. Alternativ kann aber auch das Äußere des Bauteils 4 plattenförmig (Fig. 2), insbesondere in Form und/oder Größe einer Plastikkreditkarte oder Kassette sein. Aber es kann auch die Form eines Schlüssels aufweisen oder ein Schlüssel sein, (Fig. 3), in dessen Kopf 7 und/oder Schaft 8 die elektronischen Teile eingebaut sind. Auch kann der Kopf 7 mindestens ein Bedienungselement 6 besitzen. Im Bauteil können die elektronischen Bauteile eingegossen sein und/oder es kann aus Schichten zusammengesetzt sein bzw. Schichten aufweisen.

An der Stirnseite 5 und/oder an den Seitenflächen des Bauteils 4 sind Bedienungselemente 6 angeordnet, die die verschiedensten Funktionen besitzen können.

**Ansprüche**

1. Radio im Kraftfahrzeugarmaturenbrett mit einem Bauteil, das im oder am Radio lösbar befestigt und im anoder eingesetzten Zustand durch Kontakte angeschlossen ist, in dem zumindest die wesentlichen elektronischen Bauteile des Empfängers und/oder des Verstärkers sind und dessen Außenabmessungen kleiner sind als die des Radiogehäuses, **dadurch gekennzeichnet,** daß das Bauteil (4) plattenförmig ist und insbesondere die Größe und/oder Form einer Plastik-Kreditkarte (bzw. Identitätskarte) besitzt.

2. Radio im Kraftfahrzeugarmaturenbrett mit einem Bauteil. das im oder am Radio lösbar befestigt und im anoder eingesetzten Zustand durch Kontakte angeschlossen ist, in dem zumindest die wesentlichen elektronischen Bauteile des Empfängers und/oder des Verstärkers sind und dessen Außenabmessungen kleiner sind als die des Radiogehäuses, **dadurch gekennzeichnet,** daß das Bauteil (4) streifenförmig ist.

3. Radio im Kraftfahrzeugarmaturenbrett mit einem Bauteil, das im oder am Radio lösbar befestigt und im anoder eingesetzten Zustand durch Kontakte angeschlossen ist, in dem zumindest die wesentlichen elektronischen Bauteile des Empfängers und/oder des Verstärkers sind und dessen Außenabmessungen kleiner sind als die des Radiogehäuses, **dadurch gekennzeichnet,** daß das Bauteil (4) schlüsselförmig ist.

4. Radio nach Ansprch 3, **dadurch gekennzeichnet,** daß im Schlüsselkopf (7) und/oder Schlüsselschaft (8) die elektronischen Bauteile sind.

5. Radio im Kraftfahrzeugarmaturenbrett mit einem Bauteil, das im oder am Radio lösbar befestigt und im anoder eingesetzten Zustand durch Kontakte angeschlossen ist, in dem zumindest die wesentlichen elektronischen Bauteile des Empfängers und/oder des Verstärkers sind und dessen Außenabmessungen kleiner sind als die des Radiogehäuses, **dadurch gekennzeichnet,** daß das Bauteil (4) zylindrisch ist, wobei die Zylinderachse senkrecht zur Ebene der Frontplatte (1) steht.

6. Radio nach einem der vorherigen Ansprüche, **dadurch gekennzeichnet,** daß im eingesetzten Zustand das Bauteil (4) die die Bedienungselemente enthaltende Frontplatte des Radios durchdringt.

7. Radio nach einem der vorherigen Ansprüche, **dadurch gekennzeichnet,** daß die vordere Stirnseite (5) des Bauteils (4) mindestens ein Bedienungselement (6) trägt.

## Fig.1

## Fig.2

## Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 312 456 (ROLLAND)<br>* Figuren 1-5; Spalte 4, Zeile 6 - Spalte 7, Zeile 17 *<br>--- | 1,6,7 | B 60 R 11/02 |
| D,Y | DE-C-3 624 716 (GRUNDIG)<br>* Ansprüche 1,2,4; Figuren 1,2 *<br>--- | 2 | |
| A | US-A-4 734 896 (SOMA)<br>* Figuren 1,2; Spalte 2, Zeile 23 - Spalte 3, Zeile 38 *<br>--- | 1,6,7 | |
| A | CH-A- 446 750 (VOLTAS)<br>* Insgesamt *<br>--- | 1,6,7 | |
| A | DE-U-8 709 924 (KOBER)<br>* Figur; Seiten 2-4 *<br>--- | 1,7 | |
| A | DE-U-8 801 059 (BLAUPUNKT-WERKE)<br>* Figuren; Anspruch 1; Seite 3, Zeile 6 - Seite 4, Zeile 31 *<br>--- | 5,6 | RECHERCHIERTE SACHGEBIETE (Int. Cl.4) |
| A | EP-A-0 021 499 (DATAKEY)<br>* Anspruch 1; Seite 2, Zeile 30 - Seite 3, Zeile 22 *<br>----- | 3,4 | B 60 R<br>G 11 B |

Der vorliegende Recherchenbericht wurde für alle Patentansprüche erstellt

| Recherchenort | Abschlußdatum der Recherche | Prüfer |
|---|---|---|
| DEN HAAG | 11-09-1989 | DUBOIS B.F.J. |